# EUROPÄISCHE PATENTSCHRIFT

(11) **EP 1 604 562 B1**
(45) Veröffentlichungstag und Bekanntmachung des Hinweises auf die Patenterteilung: **04.04.2007**
(21) Anmeldenummer: 05012279.5
(22) Anmeldetag: 08.06.2005
(51) Int. Cl.: A01D 90/14, B60P 1/38, A01C 3/06

(54) **Landwirtschaftliches Transportfahrzeug**
Agricultural transport vehicle
Véhicule de transport agricole

(30) Priorität: 11.06.2004 DE 102004028374
(43) Veröffentlichungstag der Anmeldung: 14.12.2005
(73) Patentinhaber: Maschinenfabrik Bernard Krone GmbH, 48480 Spelle (DE)
(72) Erfinder: Krone, Bernard, Dr.-Ing. E. h., 48480 Spelle (DE); Horstmann, Josef, Dr.-Ing., 49479 Ibbenbüren (DE); Jung, Stefan, Dipl.-Ing., 48612 Horstmar (DE)

(56) Entgegenhaltungen:
- EP-A- 0 212 186
- CH-A- 456 228
- DE-A1- 4 238 431
- DE-U- 1 847 311
- US-A- 4 091 972

## Beschreibung

Die Erfindung betrifft ein landwirtschaftliches Transportfahrzeug zum Transportieren und Entladen von Gras, Heu, Stroh, Dung oder dergleichen landwirtschaftlichen Transportguts, mit einem antreibbaren Kratzboden zur Förderung und Entladung des Transportguts (Siehe z.B. US-A-4091972).

Derartige landwirtschaftliche Transportfahrzeuge mit einem Kratzboden sind in der Praxis in vielfältigen Ausführungen bekannt. So kann es sich sowohl um einen allgemein bekannten Dungstreuer handeln, oder aber auch um einen Ladewagen mit diversen weiteren Funktionsbaugruppen wie zum Beispiel Aufnahme- und Schneideinrichtungen zum Aufnehmen von Erntegut welches auf dem Boden liegt und anschließenden Schneiden des Ernteguts während der Förderung in den Laderaum oder Dosiereinrichtungen für eine gleichmäßige aufgelockerte Entladung des Ernteguts. Ebenso kann es sich auch um einen einfachen Transportwagen für Erntegut handeln, welche auch als Häckselwagen bekannt sind. Allen genannten landwirtschaftlichen Transportfahrzeugen gemeinsam ist jedoch ein sogenannter Kratzboden. Ein Kratzboden ist eine Anordnung mit über Kettenräder geführten endlosen Ketten, mit deren Hilfe Querstäbe von vorne nach hinten über den Boden des Laderaumes des Fahrzeugs gezogen werden. So befördern diese Querstäbe z. B. das am Vorderende des Ladewagens aufgenommene Erntegut sowohl während der Beladung wie auch bei der Entladung im Laderaum von vorne zur hinteren Öffnung des Laderaums.

Bevorzugter Stand der Technik bei den Antrieben der Kratzböden sind Hydraulikmotoren die über ein Zwischengetriebe die am hinteren Ende der Ladefläche angeordnete Antriebs- und Umlenkwelle des Kratzbodens von einer Außenseite des Rahmens her antreiben. Zur Realisierung von unterschiedlichen Antriebsgeschwindigkeiten werden entweder Mehrstufenmotoren eingesetzt oder stufenlose Regelungen über die Ölmengen vorgenommen.

Bei derartigen Antriebsanordnungen ist eine recht aufwändige und besonders genau ausgerichtete Montage der Antriebe und der Antriebswelle zueinander notwendig und auch damit ist weiterhin nachteilig nicht zu vermeiden, dass im Betrieb des Kratzbodens durch wechselnde Belastungszustände und damit Durchbiegung der Antriebswelle extreme Belastungen und Verspannungen im gesamten Kratzbodenantrieb auftreten.

Des weiteren wirken sich die außen am Rahmen der Fahrzeuge angeordneten Antriebe nachteilig auf die Fahrzeugbreite aus. Durch die nach außen überstehenden Antriebe wird die nutzbare Breite der Ladefläche bei Einhaltung der maximal zulässigen Außenabmessungen eingeschränkt. Außerdem sind die Antriebe an dieser Position extrem ungeschützt und beschädigungsgefährdet. Der vorliegenden Erfindung liegt daher die Aufgabe zugrunde, eine verbessertes landwirtschaftliches Transportfahrzeug zu schaffen, das die Nachteile des Standes der Technik vermeidet und es dadurch in vorteilhafter Weise weiterbildet. Insbesondere soll ein verbesserter Kratzbodenantrieb bei reduzierten Kosten und geringerem Montageaufwand geschaffen werden.

Erfindungsgemäß wird diese Aufgabe durch ein Transportfahrzeug gemäß Patentanspruch 1 gelöst. Weitere vorteilhafte Ausführungen der Erfindung sind Gegenstand der folgenden Beschreibung und der Unteransprüche.

Bei dem erfindungsgemäßen Transportfahrzeug wird der Kratzbodenantrieb in den Rahmen der Ladefläche des Transportfahrzeugs verlegt, wodurch der Antrieb zum einen besonders geschützt ist und zum anderen die Ladeflächenbreite nicht beeinflusst, da er nicht das breitenbestimmende Bauteil ist. Diese platzsparende Anordnung des Antriebes, die auch bei beidseitigem Antrieb möglich ist, wird erfindungsgemäß dadurch ermöglicht, dass die Antriebsbaugruppe in der Art einer fliegenden Lagerung am Ende der Kratzbodenantriebswelle aufgesteckt wird und dabei gleichzeitig die Funktion des Stützlagers der Kratzbodenantriebswelle übernimmt. Bei beidseitigem Antrieb sind somit die Antriebe direkt durch die Kratzbodenantriebswelle miteinander verbunden. Die Kratzbodenantriebswelle ist gleichzeitig die Getriebeabtriebswelle beider Antriebe und die Getriebeausgangslager sind gleichzeitig die Stützlager der Kratzbodenantriebswelle.

Durch diese geschickte erfindungsgemäße Zusammenlegung von Funktionen werden im Zusammenhang mit einer im folgenden noch näher beschriebenen ebenfalls erfindungsgemäßen Aufnahme der Antriebe in den Seitenträgern des Rahmens sehr montagefreundlich mit weniger Bauteilen und damit preiswerter die Nachteile der allgemein bekannten Lösungen im Stand der Technik vermieden.

Bei der Ausführung des Kratzbodenantriebs nach der Erfindung wird der Antrieb in den Seitenträgern des Fahrzeugrahmens ausschließlich durch formschlüssige Aufnahmen und Aussparungen aufgenommen und gegen Drehung gesichert. So ist eine Montage des gesamten Kratzbodenantriebs werkzeuglos und ohne Verwendung von Sicherungselementen wie Schrauben, Bolzen etc. möglich. Lediglich die hydraulische Verbindung der Antriebsmotoren muss noch erfolgen. In seiner Lage gehalten wird der gesamte Antrieb durch die Spannung der anschließend montierten Kratzbodenketten. Durch diese vorteilhafte einfache Montage erübrigt sich eine Ausrichtung der Bauteile und Verspannungen durch verschiedene Betriebszustände können durch die Bewegungsfreiheit der Antriebe gar nicht erst auftreten.

Bereits bei einem einseitigen erfindungsgemäßen Kratzbodenantrieb sind die zuvor beschriebenen Vorteile wirksam, insbesondere kommen sie aber bei einem beidseitigen Kratzbodenantrieb zum tragen. Ein beidseitiger Antrieb der Kratzbodenantriebswelle hat jedoch noch weitere Vorteile. So wird bei einem beidseitigen Antrieb zum Beispiel die Verdrehung der Kratzbodenantriebswelle weitgehend vermieden, wodurch diese wesentlich leichter und damit auch preiswerter ausgelegt werden kann.

Des weiteren kann bei einem Kratzbodenantrieb durch mindestens zwei Hydraulikmotoren durch eine wahlweise Parallel- bzw. Reihenschaltung der Motoren mit vergleichsweise geringem Aufwand eine mehrstufige Geschwindigkeitswahl realisiert werden.

Die Erfindung wird nachfolgend anhand eines bevorzugten Ausführungsbeispieles und zugehöriger Zeichnung näher erläutert. In der Zeichnung zeigt:
**Fig. 1** eine perspektivische Ansicht eines Ladewagens von schräg hinten auf die Kratzbodenantriebsbaugruppe,
**Fig. 2** eine Detailansicht der Kratzbodenantriebsbaugruppe nach Fig. 1.

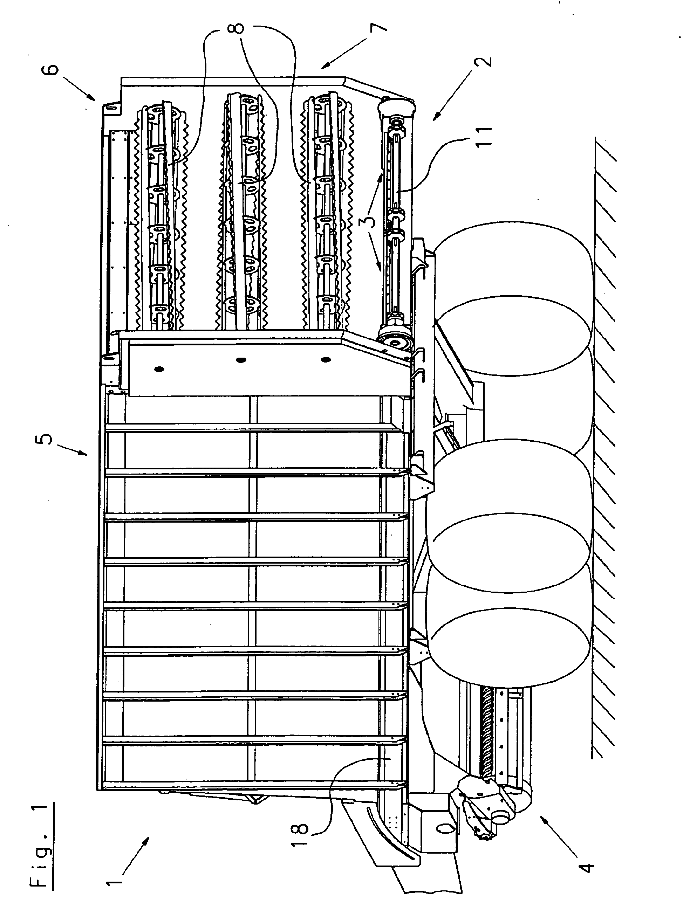

Fig. 1 zeigt einen Ladewagen 1 als ein Ausführungsbeispiel eines landwirtschaftlichen Transportfahrzeugs mit einer erfindungsgemäßen Antriebsbaugruppe 2 für den Kratzboden 3. Der teilweise nur schematisch dargestellte Ladewagen ist mit einem Aufnahme- und Förderaggregat 4 ausgerüstet mit dem insbesondere halm- bzw. blattförmiges Erntegut, welches, in der Regel zuvor zu Schwaden zusammengerafft, auf dem Feldboden liegend aufgenommen und dem Laderaum 5 zugeführt wird.

Je nach Füllgrad des vorderen Bereichs des Laderaums 5 wird das Erntegut durch den angetriebenen Kratzboden 3 derart nach hinten in Richtung der Entladeöffnung 6 gefördert, dass eine optimale Füllung des Laderaums 5 gegeben ist.

Der Ladewagen 1 des Ausführungsbeispiels weist am hinteren Ende des Laderaums 5 eine Dosiereinrichtung 7 auf. Beim Entladevorgang erfassen die rotierend angetriebenen Walzen 8 der Dosiereinrichtung 7 das Ladegut, welches durch den gleichzeitig angetriebenen Kratzboden 3 diesen zugeführt wird und so locker und gleichmäßig verteilt entladen wird. Um Transportgutverluste während der Transportfahrt zu vermeiden, ist die Entladeöffnung 6 außerhalb des Entladevorgangs mit einer nicht dargestellten nach oben verschwenkbaren Heckklappe verschlossen.

Die Antriebsbaugruppe 2 des Kratzbodens 3 ist vorzugsweise am hinteren Ende des Laderaums 5 angeordnet, da so das Ladegut in seiner Haupttransportrichtung vom gezogenen Lasttrum des Kratzbodens 3 befördert wird. Die nicht sichtbare vordere Umlenkung des Kratzbodens 3 dient gleichzeitig als Spannvorrichtung.

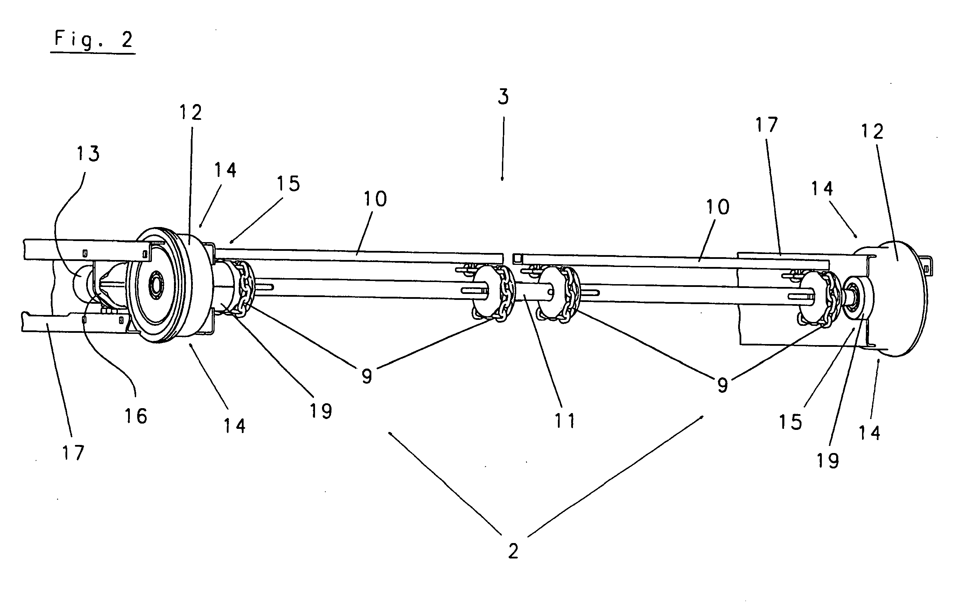

Die Detaildarstellung der Kratzboden Antriebsbaugruppe 2 der Fig. 2 zeigt deutlich den einfachen Aufbau und Einbau dieser Baugruppe. In diesem Ausführungsbeispiel ist ein geteilter Kratzboden dargestellt. Jeweils zwei Kratzbodenketten 9 sind über die gesamte Länge mit in einem gewissen Maß zueinander beabstandeten Kratzbodenleisten 10 bestückt und bilden so eine Kratzbodenhälfte. Da beide Kratzbodenhälften, also alle vier Kratzbodenketten 9 über eine Antriebswelle 11 angetrieben werden, läuft der Kratzboden 3 gleichmäßig über die gesamte Breite des Laderaums 5. Auf beiden Enden der Antriebwelle 11 ist ein Aufsteckgetriebe 12 mit jeweils einem radial an diesem angebrachten Hydraulikmotor 13 angeordnet. Diese so komplett vormontierbare Antriebsbaugruppe 2 für den Kratzboden 3 wird nun ohne weitere Montagearbeit als Einheit von hinten in die durch formschlüssige Aufnahmen 14, 15, 16 vorbereiteten Seitenträger 17 des Rahmens 18 eingeschoben.

Das Auflegen und Spannen der Kratzbodenketten 9 sichert die Antriebsbaugruppe 2 gleichzeitig nach hinten. Die in den Seitenträgern 17 des Fahrzeugrahmens 18 angeordneten Aufnahmen 16 nehmen durch ihre Formgebung die Hydraulikmotoren 13 derart auf, dass sie als Drehmomentstützen für die Antriebsbaugruppe 2 in beiden Drehrichtungen wirksam sind.

Besonders vorteilhaft für die Montage der Antriebsbaugruppe 2 wirkt sich aus, dass die Getriebeausgangslagerungen in den Ansätzen 19 der Aufsteckgetriebe 12 gleichzeitig die Stützlagerungen für die Antriebswelle 11 bilden. Durch diese geschickte Zusammenlegung von Funktionen ist keinerlei Ausrichtarbeit notwendig, da die gesamte Antriebsbaugruppe 2 durch die formschlüssige Aufnahme 15 der Ansätze 19 in den Seitenträgern 17, 18 nur durch die Steckmontage eindeutig positioniert ist.

Vorteilhaft gegenüber verschraubten Antriebsversionen ist auch die Möglichkeit durch entsprechende Freiräume in den Aufnahmen 14, 15, 16 eventuelle Bewegungen der Aufsteckgetriebe 12 und damit auch der Hydraulikmotoren 13 durch schwankende Belastungen des Kratzbodens 3 zuzulassen und damit Verspannungen zu vermeiden, was wiederum der Lebensdauer erheblich zugute kommt.

Ein weiterer Vorteil der erfindungsgemäßen Ausführungsform des Kratzbodenantriebs ist ebenfalls in Fig. 2 gut erkennbar. Durch die komplette Aufnahme der Antriebsgetriebe 12 und der Antriebsmotoren 13 innerhalb der Seitenträger 17 sind die Bauteile der Antriebsbaugruppe 2 vor Beschädigungen sehr geschützt. Des weiteren kann dadurch die maximale Fahrzeugbreite voll durch den Fahrzeugrahmen 18 ausgenutzt werden, da keine überstehenden Antriebsbauteile dieses Einschränken.

Die zuvor beschriebene Ausführungsform ist nur ein Beispiel für die Erfindung. Diverse weitere erfindungsgemäße Fahrzeuge für vielfältige Anwendungszwecke auch mit einteiligen Kratzböden und/oder einseitigen Antrieben, sowohl hydraulisch, mechanisch oder anderweitig betätigt sind denkbar.

## Patentansprüche

1. Landwirtschaftliches Transportfahrzeug zum Transportieren und Entladen von Dung, Gras, Heu, Stroh oder dergleichen landwirtschaftlichen Transportgutes mit einem sich gegen den Erdboden über ein Fahrgestell und Räder abstützenden Laderaum (5), welcher zur Förderung und Entladung des Transportgutes zumindest einen antreibbaren Kratzboden (3) umfasst, **dadurch gekennzeichnet, dass** die zumindest einseitig am Endbereich der Kratzbodenantriebswelle (11) angeordnete und verbindungselementefrei vom Rahmen (18) des Transportfahrzeugs aufgenommene Antriebsbaugruppe (2) des Kratzbodens (3) gleichzeitig die Lagerung der Kratzbodenantriebswelle (11) ausbildet.

2. Landwirtschaftliches Transportfahrzeug nach Anspruch 1, **dadurch gekennzeichnet, dass** die Reaktionskräfte- und Momente der Antriebsbaugruppe (2) ausschließlich über eine formschlüssige Gestaltung der Aufnahmen (14, 15, 16) der Antriebsbaugruppe (2) im Rahmen (18) des landwirtschaftlichen Transportfahrzeugs von diesem aufgenommen werden.

3. Landwirtschaftliches Transportfahrzeug nach Anspruch 1 oder 2, **dadurch gekennzeichnet, dass** die Kratzbodenantriebsbaugruppe (2) beidseitige Antriebseinrichtungen (12, 13) umfasst.

4. Landwirtschaftliches Transportfahrzeug nach Anspruch 3, **dadurch gekennzeichnet, dass** die Antriebswelle (11) des Kratzbodens (3) gleichzeitig die Getriebeabtriebswelle beider Antriebsgetriebe (12) bildet.

5. Landwirtschaftliches Transportfahrzeug nach einem der Ansprüche 1 bis 4, **dadurch gekennzeichnet, dass** der Antrieb des Kratzbodens (3) mittels zumindest eines Hydraulikmotors (13) erfolgt.

6. Landwirtschaftliches Transportfahrzeug nach einem der Ansprüche 1 bis 5, **dadurch gekennzeichnet, dass** die Baubreite des Fahrzeugs nicht durch Bauteile der Kratzbodenantriebsbaugruppe (2) beeinflusst wird.

7. Landwirtschaftliches Transportfahrzeug nach zumindest einem der vorgehenden Ansprüche, **dadurch gekennzeichnet, dass** das Transportfahrzeug ein an ein Zugfahrzeug anhängbares Transportfahrzeug ist.

8. Landwirtschaftliches Transportfahrzeug nach zumindest einem der vorgehenden Ansprüche, **dadurch gekennzeichnet, dass** das Transportfahrzeug ein Dungverteilfahrzeug ist.

9. Landwirtschaftliches Transportfahrzeug nach zumindest einem der Ansprüche 1 bis 7, **dadurch gekennzeichnet, dass** das Transportfahrzeug ein ein Erntegutaufnahme- und Förderaggregat (4) umfassender Ladewagen (1) ist.

## Claims

1. Agricultural transport vehicle for transporting and unloading manure, grass, hay, straw or the like agricultural materials for transportation, having a load-carrying compartment (5) which is supported relative to the ground by means of a chassis and wheels and which comprises at least one drivable moving floor (3) to allow the material for transportation to be fed and unloaded, **characterised in that** the driving sub-assembly (2) for the moving floor (3), which driving sub-assembly (2) is arranged in the end region of the drive-shaft (11) of the moving floor at at least one end thereof and is held by the frame (18) of the transport vehicle without any connecting members, forms, at the same time, the mounting of the drive shaft (11) of the moving floor.

2. Agricultural transport vehicle according to claim 1, **characterised in that** the forces of reaction and torques from the driving sub-assembly (2) are absorbed by the frame (18) of the agricultural transport vehicle solely by virtue of the fact that the means (14, 15, 16) for holding the driving sub-assembly (2) in the said frame (18) of the agricultural vehicle are of a positively interengaging form.

3. Agricultural transport vehicle according to claim 1 or 2, **characterised in that** the driving sub-assembly (2) for the moving floor comprises drive means (12, 13) at both ends.

4. Agricultural transport vehicle according to claim 3, **characterised in that** the drive shaft (11) of the moving floor (3) at the same time forms the gearbox output shaft of the two driving gearboxes (12).

5. Agricultural transport vehicle according to one of claims 1 to 4, **characterised in that** the moving floor (3) is driven by means of at least one hydraulic motor (13).

6. Agricultural transport vehicle according to one of claims 1 to 5, **characterised in that** the overall width of the vehicle is not affected by components of the driving sub-assembly (2) for the moving floor.

7. Agricultural transport vehicle according to at least one of the foregoing claims, **characterised in that** the transport vehicle is a transport vehicle which can be hitched to a towing vehicle.

8. Agricultural transport vehicle according to at least one of the foregoing claims, **characterised in that** the transport vehicle is a manure-spreading vehicle.

9. Agricultural transport vehicle according to at least one of claims 1 to 7, **characterised in that** the transport vehicle is a self-loading wagon (1) comprising a unit (4) for picking up and feeding crops for harvesting.

## Revendications

1. Véhicule de transport à usage agricole pour transporter et décharger du fumier, de l'herbe, du foin, de la paille ou produits agricoles analogues transportés, ayant un volume de chargement (5) appuyé sur le sol par un châssis et des roues, et au moins un plancher à raclettes (3) entraîné pour transporter et décharger le produit,
**caractérisé en ce que**
le groupe d'entraînement (2) du plancher mobile à raclettes (3), prévu au moins d'un côté dans la zone d'extrémité de l'arbre d'entraînement (11) du plancher mobile à raclettes, est reçu sans élément de liaison par le châssis (18) du véhicule de transport, constituant en même temps le palier de l'arbre d'entraînement (11) du plancher mobile à raclettes.

2. Véhicule de transport à usage agricole selon la revendication 1,
**caractérisé en ce que**
les forces de réaction et les couples de réaction du groupe d'entraînement (2) sont reçus exclusivement par une liaison par la forme des organes de réception (14, 15, 16) du groupe d'entraînement (2) dans le châssis (18) du véhicule de transport à usage agricole, par celui-ci.

3. Véhicule de transport à usage agricole selon la revendication 1 ou 2,
**caractérisé en ce que**
le groupe d'entraînement (2) du plancher mobile à raclettes comprend des installations d'entraînement (12, 13) des deux côtés.

4. Véhicule de transport à usage agricole selon la revendication 3,
**caractérisé en ce que**
l'arbre d'entraînement (11) du plancher mobile à raclettes (3) constitue en même temps l'arbre de sortie de transmission des deux transmissions d'entraînement (12).

5. Véhicule de transport à usage agricole selon l'une des revendications 1 à 4,
**caractérisé en ce que**
l'entraînement du plancher mobile à raclettes (3) est assuré par au moins un moteur hydraulique (13).

6. Véhicule de transport à usage agricole selon l'une des revendications 1 à 5,
**caractérisé en ce que**
la largeur du véhicule est indépendante des composants du groupe d'entraînement (2) du plancher mobile à raclettes.

7. Véhicule de transport à usage agricole selon au moins l'une des revendications précédentes,
**caractérisé en ce que**
le véhicule de transport est une remorque qui s'attèle à un tracteur.

8. Véhicule de transport à usage agricole selon au moins l'une des revendications précédentes,
**caractérisé en ce que**
le véhicule de transport est un véhicule épandeur de fumier.

9. Véhicule de transport à usage agricole selon au moins l'une des revendications 1 à 7,
**caractérisé en ce que**
le véhicule de transport est un chariot de chargement (1) comportant un groupe de prise et de transfert de produits de récolte.
